# EUROPEAN PATENT SPECIFICATION

(11) **EP 1 743 526 B1**
(45) Date of publication and mention of the grant of the patent: **23.04.2014**
(21) Application number: 06253220.5
(22) Date of filing: 22.06.2006
(51) Int. Cl.: A01N 25/10, A01N 43/80, C08K 5/46

(54) **Resin immobilized biocide**
Von Harz immobilisierte Biozide
Biocide immobilisé sur une résine

(30) Priority: 11.07.2005 US 698136 P
(43) Date of publication of application: 17.01.2007
(73) Proprietor: Rohm and Haas Company, Philadelphia, PA 19106-2399 (US)
(72) Inventor: Hamel, Roger Gerard, Newtown, Pennsylvania 18940 (US)
(74) Representative: Kent, Venetia Katherine

(56) References cited:
- WO-A1-02/32989
- US-B2- 6 875 797

## Description

This invention relates to a composition comprising a biocide immobilized in a polymeric resin.

Compositions containing 4,5-dichloro-2-n-octyl-4-isothiazolin-3-one or 2-n-oetyl-4-isothiazolin-3-one in one or more of a specified group of resins are disclosed in U.S. Pat. No. 6,875,797. However, additional biocide-resin combinations in which the biocide is compatible with the resin would be useful in preparing plastic articles.

The problem addressed by the present invention is to provide additional resin compositions containing 4,5-dichloro-2-n-octyl-4-isothiazolin-3-one.

### STATEMENT OF THE INVENTION

The present invention is directed to a composition comprising: (a) 70% to 99% of a polymer comprising: (i) 75% to 95% of monomer units derived from methyl methacrylate; and (ii) 5% to 25% of monomer units derived from C₂-C₆ alkyl (meth)acrylates; said polymer having a Tg>20°C and M_{w}>100,000; and (b) 1% to 30% of a biocide comprising at least 75% of 4,5-dichloro-2-n-octyl-4-isothiazolin-3-one.

### DETAILED DESCRIPTION OF THE INVENTION

All percentages are weight percentages, unless specified otherwise. The polymer used in this invention is an "acrylic polymer," i.e., a polymer comprising at least 80% of monomer units derived from among the following acrylic monomers: acrylonitrile (AN); acrylamide (AM), methacrylamide, and their N-substituted derivatives; acrylic acid (AA), methacrylic acid (MAA), and their esters. The terms (meth)acrylic and (meth)acrylate refer to acrylic or methacrylic, and acrylate or methacrylate, respectively. Esters of AA and MAA include, but are not limited to, alkyl esters such as methyl methacrylate (MMA), ethyl methacrylate (EMA), butyl methacrylate (BMA), methyl acrylate (MA), ethyl acrylate (EA), butyl acrylate (BA), as well as other esters of AA or MAA. The polymer also may contain monomer units derived from other ethylenically unsaturated monomers, e.g., styrene or substituted styrenes, including, e.g, α-methylstyrene; other α,β-unsaturated carboxylic acids, esters and amides; vinyl esters or halides; etc. Preferably, the polymer contains at least 90% monomer residues derived from acrylic monomers, more preferably at least 95%, and most preferably at least 98%; preferably the polymer is substantially free of monomer units other than those of AA, MAA and their esters. Preferably, a polymer in this invention is present in the form of a dry solid.

In one embodiment of the invention, the polymer has a Tg of at least 40°C, more preferably at least 60°C, and most preferably at least 80°C. Preferably, the T_{g} is no greater than 120°C, more preferably no greater than 110°C. T_{g} is calculated using the Fox equation (T.G. Fox, Bull. Am. Physics Soc., vol. 1 (3), page 123 (1956)). Preferably, the M_{w} of the polymer is at least 100,000, more preferably at least 500,000, and most preferably at least 1,000,000. Preferably, M_{w} is no more than 15,000,000, more preferably no more than 12,000,000. Weight-average molecular weight (M_{w}) is measured by standard gel permeation chromatography (GPC) techniques. The GPC method is calibrated using known high molecular weight polystyrene standards available commercially. Preferably, the polymers are not crosslinked. Preferably, the polymers are substantially linear.

Preferably, at least 8% of the monomer units in the polymer are derived from C₂-C₆ alkyl (meth)acrylates, more preferably at least 10%. Preferably, no more than 20% of the monomer units are derived from C₂-C₆ alkyl (meth)acrylates. The polymer may contain monomer units derived from several different C₂-C₆ alkyl (meth)acrylates. The polymer may also contain small amounts of monomer units derived from methyl acrylate; preferably, the polymer is substantially free of monomer units derived from methyl acrylate. Preferably, the polymer contains monomer units derived from 1, 2 or 3 C₂-C₆ alkyl (meth)acrylates. Preferably, at least 80% of the monomer units in the polymer are derived from methyl methacrylate. Preferably, no more than 92% of the monomer units are derived from methyl methacrylate, more preferably no more than 90%. In one preferred embodiment, the C₂-C₆ alkyl (meth)acrylates are C₂-C₄ alkyl (meth)acrylates. Particularly preferred C₂-C₄ alkyl (meth)acrylates are ethyl acrylate, butyl acrylate and butyl methacrylate.

Preferably, the composition contains at least 5% of the biocide component, more preferably at least 8%. Preferably, the composition contains no more than 25% of the biocide component, more preferably no more than 20%. Preferably, the composition contains at least 75% of the polymer, more preferably at least 80%. Preferably, the composition contains no more than 95% of the polymer, more preferably no more than 92%.

Preferably, polymers used in this invention are produced in the form of aqueous suspensions by emulsion polymerization techniques, and then dried to form solid polymer, as described, e.g., in U.S. Pat. No. 5,352,500.

The biocide component of the composition comprises at least 75% of 4,5-dichloro-2-n-octyl-4-isothiazolin-3-one (DCOIT). Other biocides also may be present in the composition. Preferably, the biocides present in the composition comprise at least 90% DCOIT, more preferably at least 95%. In one preferred embodiment, the composition is substantially free of biocides other than DCOIT and OIT (2-n-octyl-4-isothiazolin-3-one). In another preferred embodiment, the composition is substantially free of biocides other than DCOIT.

### EXAMPLES

### Example 1

The following dry solid polymers were used in preparing biocide/polymer compositions.

**Table 1: List of Polymers**

| Polymer | Co-monomers | T_{g}, °C | M_{w} |
|---|---|---|---|
| A | 90 MMA/10 EA | 97-100 | 1-1.25 MM |
| B | 86.2 MMA/12.2 BA/1.6 BMA | 97-100 | 1.6-2.0 MM |
| C | 84 MMA/12 BA/4 BMA | 89-91 | 5.5-6.5 MM |
| D | 81.2 MMA/18.8 BA | 84-87 | 8-10 MM |

### Preparation of Biocide/Polymer Compositions

Samples having the compositions listed below in Table 2 were blended and then extruded using a 0.75-inch (19 mm) diameter single screw extruder with all heater zones and die set to 185°C. The extruder was run at 40 rpm. Five inch (12.7 cm) by five inch by 0.125 inch (0.318 cm) plaques were pressed of each formulation on a hydraulic press at 190°C.

**Table 2**

| | A | B | C | D | DCOIT |
|---|---|---|---|---|---|
| 1 | 100 | 0 | 0 | 0 | 0 |
| 2 | 90 | 0 | 0 | 0 | 10 |
| 3 | 85 | 0 | 0 | 0 | 15 |
| 4 | 80 | 0 | 0 | 0 | 20 |
| 5 | 0 | 100 | 0 | 0 | 0 |
| 6 | 0 | 90 | 0 | 0 | 10 |
| 7 | 0 | 85 | 0 | 0 | 15 |
| 8 | 0 | 80 | 0 | 0 | 20 |
| 9 | 0 | 0 | 100 | 0 | 0 |
| 10 | 0 | 0 | 90 | 0 | 10 |
| 11 | 0 | 0 | 85 | 0 | 15 |
| 12 | 0 | 0 | 80 | 0 | 20 |
| 13 | 0 | 0 | 0 | 100 | 0 |
| 14 | 0 | 0 | 0 | 90 | 10 |
| 15 | 0 | 0 | 0 | 85 | 15 |
| 16 | 0 | 0 | 0 | 80 | 20 |

### Compatibility Testing

The plaques were aged at -10°C, room temperature and 60°C. They were visually evaluated for color change and any sign of bloom or spew after a minimum of 30 days. The colors of the samples stored at 60°C were measured at 0, 7, 14, 21 and 28 days.

### Efficacy Testing

Plaques for microbiological testing were prepared by melt-mixing a 60 g charge of each formulation described below in Table 3 on a Brabender rheometer set at 190°C and 60 rpm. The mixtures were run for one minute past the fusion peak. The mixtures were then removed and molded on a hydraulic press at 190°C.

**Table 3**

| | 1 | 2 | 3 | 4 | 5 | 6 | 7 | 8 | 9 | 10 | 11 |
|---|---|---|---|---|---|---|---|---|---|---|---|
| 40% 4 melt HDPE, 60% 40 mesh Oak | 100 | 99.5 | 99.0 | 99.0 | 100 | 99.5 | 99.0 | 99.5 | 99.0 | 99.0 | 99.0 |
| 10% DCOIT/A | | 0.5 | 1.0 | | | | | | | | |
| 10% DCOIT/C | | | | | | 0.5 | 1.0 | | | | |
| 10% DCOIT/D | | | | | | | | 0.5 | 1.0 | | |
| A | | | | 1.0 | | | | | | | |
| C | | | | | | | | | | 1.0 | |
| D | | | | | | | | | | | 1.0 |

### Results of Compatibility and Efficacy Testing

All of the samples extruded well, although samples made with polymers B, C and D had somewhat lower hot strength than samples made with polymer A. All of the samples showed good compatibility of DCOIT with the polymer. There was no visual indication of bloom or spew in any of the samples after one month of aging at -10°C, room temperature or 60°C. Color measurements (yellowness index from Hunter colorimeter, YI) of samples stored at 60°C for 0, 7, 14, 21 and 28 days are given in Table 4.

**Table 4**

| % DCOIT | polymer | 0 | 7 | 14 | 21 | 28 |
|---|---|---|---|---|---|---|
| 0 | A | 26.15 | 31.69 | 31.71 | 30.31 | 29.63 |
| 10 | A | 40.89 | 40.90 | 40.07 | 40.58 | 39.73 |
| 15 | A | 46.74 | 42.09 | 42.28 | 36.41 | 40.45 |
| 20 | A | 44.75 | 47.91 | 50.13 | 52.15 | 48.89 |
| 0 | B | 24.07 | 13.58 | 12.82 | 17.21 | 11.86 |
| 10 | B | 28.40 | 32.87 | 31.11 | 31.46 | 33.73 |
| 15 | B | 34.00 | 38.73 | 40.03 | 38.16 | 39.87 |
| 20 | B | 32.95 | 36.89 | 37.36 | 35.94 | 35.04 |
| 0 | C | 20.21 | 24.08 | 18.88 | 14.59 | 15.82 |
| 10 | C | 13.82 | 20.52 | 19.80 | 21.30 | 21.58 |
| 15 | C | 27.97 | 25.45 | 24.82 | 25.71 | 23.98 |
| 20 | C | 25.87 | 24.75 | 24.49 | 25.14 | 23.47 |
| 0 | D | 41.46 | 34.25 | 35.64 | 34.58 | 34.73 |
| 10 | D | 45.25 | 33.78 | 32.06 | 33.06 | 32.10 |
| 15 | D | 37.25 | 33.01 | 31.83 | 35.82 | 34.22 |
| 20 | D | 48.11 | 34.25 | 29.53 | 31.64 | 31.31 |

The polymers and the DCOIT/polymer compositions all were dispersed well into the HDPE/Oak compositions. There was no indication of incompatibility of the biocide formulations.

A summary of the results of antimicrobial testing of the plaques is provided in Table 5.

**Table 5**

| Sample | Pink Stain-*Stv. reticulum* | Fungal Growth | |
|---|---|---|---|
| | | *Aspergillus niger* | ASTM G-21-96 |
| blank | 0/* | 0/MG | HG |
| 0.5% of 10% DCOIT/A | 8/NS | 15/NG | NG |
| 1% of 10% DCOIT/A | 10/NS | 18/NG | NG |
| 1% A | 0-2/* | 0/MG | HG |
| blank | 0/TS | 0/MG | HG |
| 0.5% of 10% DCOIT/C | 8/NS | 0/LG | HG |
| 1% of 10% DCOIT/C | 11/NS | 0.5/NG | NG |
| 0.5% of 10% DCOIT/D | 9/NS | 0/NG | NG |
| 1% of 10% DCOIT/D | 11/NS | 2/NG | NG |
| 1% C | 0.5/NS | 0/MG | HG |
| 1% D | 0/TS | 0/LG | HG |

| | | | |
|---|---|---|---|
| * sample color interfered with detection of the stain | | | |

### Example 2

Plaques of the biocide/polymer compositions listed below in Table 6 were prepared.

**Table 6**

| Polymer A | Polymer C | DCOIT | OIT |
|---|---|---|---|
| 100 | 0 | 0 | 0 |
| 90 | 0 | 10 | 0 |
| 90 | 0 | 0 | 10 |
| 0 | 100 | 0 | 0 |
| 0 | 90 | 10 | 0 |
| 0 | 90 | 0 | 10 |

The samples were prepared on the Reliable two-roll mill set at 325°F (163°C), with the roll speed set to 10 rpm. The charge size was 125g. The samples were processed for four minutes after banding. 6 inch (15 cm) x 6 inch x 0.125 inch (0.318 cm) plaques were pressed between chromed sheets in the heated Carver press.

The plaques were aged at -10°C, room temperature, and 60°C. They were visually evaluated for changes in appearance after a minimum of 30 days for color change or any signs of bloom or spew.

### Concentrate preparation

Biocide/polymer compositions as described below in Table 7 were prepared.

**Table 7**

| Polymer A | Polymer C | DCOIT | OIT (comparative) |
|---|---|---|---|
| 90 | 0 | 10 | 0 |
| 90 | 0 | 0 | 10 |
| 0 | 90 | 10 | 0 |
| 0 | 90 | 0 | 10 |

Pellets of each were prepared on the Haake 0.75-inch (19 mm) single-screw extruder.

The formulations containing Polymer A were pelletized at the following conditions: Zone 1 = 130°C, Zone 2 = 150°C, Zone 3 = 160°C, Die = 170°C, and a screw speed of 50 rpm. For the formulations containing Polymer C the temperatures were increased to: Zone 1 = 150°C, and Zone 2 = 160°C.

The average torque for the Polymer A with OIT was 2500mg. For Polymer C with DCOIT, the average torque dropped to 850mg. The Polymer C samples were extruded at a higher temperature because of higher torque. At the higher processing temperature, the torque of both Polymer C samples was about 3000mg.

### Efficacy Testing

Four pounds (1.8 kg) of a flexible PVC compound were prepared in a Merlin FM-10 blender. The composition of the blend was as follows:

| | |
|---|---|
| PVC, K=70 | 100.00 |
| Diisodecylphthalate | 40.00 |
| Epoxidized soybean oil | 7.70 |
| MARK 4716* | 3.00 |
| Stearic acid | 0.25 |

| | |
|---|---|
| *Ba/Zn liquid stabilizer available from Crompton Corp. | |

The blending cycle consisted of adding the PVC resin at room temperature, the stabilizer at 52°C, the lubricant at 57°C, the plasticizer at 66°C. Cooling began at 88°C and the blend was dropped at 66°C.

Milled sheets were prepared using the Reliable two-roll mill. The test sheets had the following compositions:

### Neat Flexible PVC compound

The Flexible PVC compound with 1% of the following:
10% DCOIT in Flexible PVC
10% OIT in Flexible PVC (comparative)
10% DCOIT in Polymer A
10% OIT in Polymer A (comparative)
10% DCOIT in Polymer C
10% OIT in Polymer C (comparative)

The front and back rolls of the mill were set at 365°F (185°C), and the roll speed was set at 15 rpm. The films were milled for five minutes after banding.

### Results

Compatibility Testing - There was no color change in any of the samples stored at -10°C and at room temperature. There was a slight color change on all samples stored at 60°C. None of the samples showed any sign of bloom or spew. The DCOIT and OIT appear to be compatible in both Polymer A and Polymer C at levels suitable to make solid biocide concentrates.

Concentrate Preparation - Solid biocide pellets were successfully prepared. The samples were analyzed by HPLC to determine if any degradation of the biocide occurs during processing.

Efficacy Testing - Observations were made during preparation of the films on the two-roll mill. The solid biocide concentrate pellets all dispersed well into the flexible PVC compound. The only processing difference that was observed during milling was that the 10% DCOIT in Polymer A and the 10% DCOIT in Polymer C took longer to disperse into the PVC compound than the other concentrates. None of the films exhibited any difference in color or clarity. A portion of each film sheets was tested for antimicrobial efficacy. The results are presented below in Tables 8 and 9.

**Table 8**

| Sample | Zone Of Inhibition (mm)/Growth In Contact Area | |
|---|---|---|
| | *Staphylococcus aureus* | *Klebsiella pneumoniae* |
| Blank | 0/GCA | 0/GCA |
| 10% DCOIT/PVC | 0/NGCA | 0/GCA |
| 10% OIT/PVC (comparative) | 0/NGCA | 0/GCA |
| 10% DCOIT/A | 5/NGCA | 0/GCA |
| 10% OIT/A (comparative) | 1/NGCA | 0/GCA |
| 10% DCOIT/C | 4/NGCA | 0/GCA |
| 10% OIT/C (comparative) | 0/NGCA | 0/GCA |

**Table 9**

| Sample | Pink Stain-*Stv reticulum* | ASTM G-21-96 Fungal Growth | *Aspergillus niger* Fungal Growth |
|---|---|---|---|
| Blank | 0/LS | HG | 0/LG |
| 10% DCOIT/PVC | 0/LS | LG | 0/NG |
| 10% OIT/PVC (comparative) | 0/LS | NG* | 10/NG |
| 10% DCOIT/A | 3/NS | NG | 10/NG |
| 10% OIT/A (comparative) | 1/NS | NG | 10/NG |
| 10% DCOIT/C | 4/NS | MG | 0/NG |
| 10% OIT/C (comparative) | 0/NS | NG | 5-10/NG |

| | | | |
|---|---|---|---|
| *growth along the edge of the sample | | | |

### Test Methods and Definitions

### Bacterial Resistance (qualitative)

The samples were placed on nutrient agar inoculated with:

| | |
|---|---|
| Staphylococcus aureus | ATCC 6538 |
| Klebsiella pneumoniae | ATCC 4352 |

After 24 hours of incubation at 37°C, antibacterial activity was evaluated by measuring (in mm) the size of a clear zone of no growth (Zone of Inhibition) around each sample, and visually determining growth in the contact area. Bacterial growth is rated by the following scale:

### No Growth Contact Area (NGCA)

This is a designation frequently used in bacterial tests. Bacterial organisms are difficult to determine on the sample itself, so the area immediately under the sample is examined for growth. This is usually a passing designation and indicates that there were no bacterial colonies found under the sample.

### Growth Contact Area (GCA)

This indicates failure of the sample since colonies of bacteria are detected immediately under the sample in contact with the same.

### Mildew Resistance

### Pink Stain

The samples were placed on nutrient agar inoculated with the pink staining organism, Stv. reticulum ATCC 25607. After 14 days of incubation at 28°C, antifungal activity was evaluated by measuring (in mm) the size of a clear zone of no growth (Zone of Inhibition) around each sample, and visually rating the degree of stain.
Surface stain is rated by the following scale.
No Stain (NS)
Trace of Stain (TS)
Light Stain (LS)
Moderate Stain (MS)
Heavy Stain (HS)

### ASTM G-21-96

No Growth (NG)
Traces of Growth (less than 10% coverage) (TG)
Light Growth (10 to 30% coverage) (LG)
Moderate Growth (30 to 60% coverage) (MG)
Heavy Stain (60% to complete coverage) (HG)

## Claims

1. A composition comprising:
(a) 70% to 99% of a polymer comprising: (i) 75% to 95% of monomer units derived from methyl methacrylate; and (ii) 5% to 25% of monomer units derived from C₂-C₆ alkyl (meth)acrylates; said polymer having a Tg>20 °C and Mw>100,000; and
(b) 1% to 30% of a biocide comprising at least 75% of 4,5-dichloro-2-n-octyl-4-isothiazolin-3-one.

2. The composition of claim 1 in which the polymer has a Tg>60 °C.

3. The composition of claim 1 in which the polymer has 5% to 25% of monomer units derived from C₂-C₄ alkyl (meth)acrylates.

4. The composition of claim 1 in which the polymer comprises 80% to 92% of monomer units derived from methyl methacrylate and 8% to 20% of monomer units derived from C₂-C₄ alkyl (meth)acrylates.

5. The composition of claim 1 having 5% to 20% of a biocide comprising at least 75% of 4,5-dichloro-2-n-octyl-4-isothiazolin-3-one.

6. The composition of claim 1 in which the polymer has Mw>500,000.

7. A composition as claimed in claim 1 comprising:
(a) 80% to 95% of a polymer comprising: (i) 80% to 92% of monomer units derived from methyl methacrylate; and (ii) 8% to 20% of monomer units derived from C₂-C₄ alkyl (meth)acrylates; said polymer having a Tg>60 °C and Mw>500,000; and
(b) 5% to 20% of a biocide comprising at least 75% 4,5-dichloro-2-n-octyl-4-isothiazolin-3-one.

8. The composition of claim 7 in which said C₂-C₄ alkyl (meth)acrylates are selected from the group consisting of ethyl acrylate, butyl acrylate and butyl methacrylate..

## Patentansprüche

1. Eine Zusammensetzung, die Folgendes beinhaltet:
(a) zu 70 % bis 99 % ein Polymer, beinhaltend: (i) zu 75 % bis 95 % Monomereinheiten, die von Methylmethacrylat abgeleitet sind; und (ii) zu 5 % bis 25 % Monomereinheiten, die von C₂-C₆-Alkyl(meth)acrylaten abgeleitet sind; wobei das Polymer eine Tg > 20 °C und ein Mw > 100 000 aufweist; und
(b) zu 1 % bis 30 % ein Biozid, das mindestens zu 75 % 4,5-Dichlor-2-n-octyl-4-isothiazolin-3-on beinhaltet.

2. Zusammensetzung gemäß Anspruch 1, wobei das Polymer eine Tg > 60 °C aufweist.

3. Zusammensetzung gemäß Anspruch 1, wobei das Polymer zu 5 % bis 25 % Monomereinheiten aufweist, die von C₂-C₄-Alkyl(meth)acrylaten abgeleitet sind.

4. Zusammensetzung gemäß Anspruch 1, wobei das Polymer zu 80 % bis 92 % Monomereinheiten aufweist, die von Methylmethacrylat abgleitet sind, und zu 8 % bis 20 % Monomereinheiten, die von C₂-C₄-Alkyl(meth)acrylaten abgeleitet sind.

5. Zusammensetzung gemäß Anspruch 1, die zu 5 % bis 20 % ein Biozid aufweist, das mindestens zu 75 % 4,5-Dichlor-2-n-octyl-4-isothiazolin-3-on beinhaltet.

6. Zusammensetzung gemäß Anspruch 1, wobei das Polymer ein Mw > 500 000 aufweist.

7. Zusammensetzung gemäß Anspruch 1, die Folgendes beinhaltet:
(a) zu 80 % bis 95 % ein Polymer, beinhaltend: (i) zu 80 % bis 92 % Monomereinheiten, die von Methylmethacrylat abgeleitet sind; und (ii) zu 8 % bis 20 % Monomereinheiten, die von C₂-C₄-Alkyl(meth)acrylaten abgeleitet sind; wobei das Polymer eine Tg > 60 °C und ein Mw > 500 000 aufweist; und
(b) zu 5 % bis 20 % ein Biozid, das mindestens zu 75 % 4,5-Dichlor-2-n-octyl-4-isothiazolin-3-on beinhaltet.

8. Zusammensetzung gemäß Anspruch 7, wobei die C₂-C₄-Alkyl(meth)acrylate ausgewählt sind aus der Gruppe, bestehend aus Ethylacrylat, Butylacrylat und Butylmethacrylat.

## Revendications

1. Une composition comprenant :
(a) de 70 % à 99 % d'un polymère comprenant : (i) de 75 % à 95 % de motifs monomères dérivés de méthacrylate de méthyle ; et (ii) de 5 % à 25 % de motifs monomères dérivés de (méth)acrylates d'alkyle en C₂ à C₆ ; ledit polymère ayant une Tg > 20 °C et une Mw > 100 000 ; et
(b) de 1 % à 30 % d'un biocide comprenant au moins 75 % de 4,5-dichloro-2-n-octyl-4-isothiazolin-3-one.

2. La composition de la revendication 1 dans laquelle le polymère a une Tg > 60 °C.

3. La composition de la revendication 1 dans laquelle le polymère a de 5 % à 25 % de motifs monomères dérivés de (méth)acrylates d'alkyle en C₂ à C₄.

4. La composition de la revendication 1 dans laquelle le polymère comprend de 80 % à 92 % de motifs monomères dérivés de méthacrylate de méthyle et de 8 % à 20 % de motifs monomères dérivés de (méth)acrylates d'alkyle en C₂ à C₄.

5. La composition de la revendication 1 ayant de 5 % à 20 % d'un biocide comprenant au moins 75 % de 4,5-dichloro-2-n-octyl-4-isothiazolin-3-one.

6. La composition de la revendication 1 dans laquelle le polymère a une Mw > 500 000.

7. Une composition telle que revendiquée dans la revendication 1 comprenant :
(a) de 80 % à 95 % d'un polymère comprenant : (i) de 80 % à 92 % de motifs monomères dérivés de méthacrylate de méthyle ; et (ii) de 8 % à 20 % de motifs monomères dérivés de (méth)acrylates d'alkyle en C₂ à C₄ ; ledit polymère ayant une Tg > 60 °C et une Mw > 500 000 ; et
(b) de 5 % à 20 % d'un biocide comprenant au moins 75 % de 4,5-dichloro-2-n-octyl-4-isothiazolin-3-one.

8. La composition de la revendication 7 dans laquelle lesdits (méth)acrylates d'alkyle en C₂ à C₄ sont sélectionnés dans le groupe consistant en l'acrylate d'éthyle, l'acrylate de butyle et le méthacrylate de butyle.
